# EUROPEAN PATENT APPLICATION

(11) **EP 2 487 901 A2**
(43) Date of publication of application: **15.08.2012**
(21) Application number: 10822263.9
(22) Date of filing: 08.10.2010
(51) Int. Cl.: H04N 7/015, H04N 7/24

(54) **METHOD AND APPARATUS FOR TRANSCEIVING BROADCAST SIGNALS**

(30) Priority: 08.10.2009 US 249602 P
(71) Applicant: LG Electronics Inc., Seoul 150-721 (KR)
(72) Inventor: KO, Woo Suk, Seoul 137-724 (KR); MOON, Sang Chul, Seoul 137-724 (KR)
(74) Representative: Cabinet Plasseraud
(86) International application number: PCT/KR2010/006888
(87) International publication number: WO 2011/043618

(57) **Abstract**

Disclosed are a digital broadcast transmitter and receiver. The digital broadcast transmitter according to one embodiment of the present invention comprises: an SVC encoder for SVC encoding broadcast data into a base layer and an enhancement layer; a BICM module for bit interleaved coding and modulation (BICM) processing the base layer and the enhancement layer; a frame builder for building a frame including the base layer and the enhancement layer, which are BICM-processed; a MIMO processor for processing data contained in the frame by a MIMO, MISO and/or SISO scheme; and an OFDM generator for OFDM modulating the processed data and transmitting broadcast signals. In addition, the digital broadcast receiver according to one embodiment of the present invention comprises: an OFDM demodulation unit for receiving broadcast signals and OFDM demodulating the received signals; a MIMO decoder for MIMO decoding the demodulated broadcast signal and outputting a frame; a frame recovery unit for extracting a base layer and an enhancement layer from the frame; a BICM deprocessing module for BICM deprocessing the base layer and the enhancement layer; and an SVC decoder for SVC decoding the base layer and the enhancement layer to obtain broadcast data.

## Description

### [Technical Field]

The present invention relates to a method for transceiving broadcast signals and an apparatus for transceiving broadcast signals, and more particularly, to a method for transceiving broadcast signals, which can enhance data transmission efficiency and is compatible with conventional methods for transceiving broadcast signals, and a transceiving apparatus thereof.

### [Background Art]

As analog broadcasting will soon end, a variety of technologies for transmitting and receiving digital broadcast signals has been developed. Digital broadcast signals can transmit a greater capacity of video/audio data than analog broadcast signals, and can include a variety of optional data in addition to video/audio data.

A digital broadcast system can provide High Definition (HD) images, multi-channel sound, and a variety of optional services. However, data transmission efficiency for a high capacity of data transmission, robustness of transmitting and receiving networks, and flexibility of networks in consideration of mobile receiving equipment are problems that should still be improved.

### [Disclosure]

### [Technical Problem]

A technical object of one embodiment of the present invention is to provide a method and apparatus for transceiving broadcast signals, which can enhance data transmission efficiency in a digital broadcast system.

Another technical object of the present invention is to provide a method and apparatus for transceiving broadcast signals, which can receive digital broadcast signals without error even under an indoor environment or using mobile receiving equipment.

A further technical object of the present invention is to provide a method and apparatus for transceiving broadcast signals, which can maintain compatibility with a conventional broadcast system in addition to achieving the above described objects.

### [Technical Solution]

To solve the above described technical objects and in accordance with one embodiment of the present invention, there is provided a digital broadcast transmitter including an SVC encoder for SVC encoding broadcast data into a base layer and an enhancement layer, a BICM module for BICM processing the base layer and the enhancement layer, a frame builder for building a frame including the base layer and enhancement layer, which are BICM processed, a MIMO processor for processing data contained in the frame according to at least one of MIMO, MISO and SISO schemes, and an OFDM generator for OFDM modulating the processed data and transmitting broadcast signals.

In accordance with another aspect of the present invention, there is provided a digital broadcast receiver including an OFDM demodulator for receiving broadcast signals and OFDM demodulating the broadcast signals, a MIMO decoder for MIMO decoding the demodulated broadcast signals and outputting a frame, a frame recoverer for extracting a base layer and an enhancement layer from the frame, a BICM reverse processing module for BICM reverse processing the base layer and the enhancement layer; and an SVC decoder for SVC decoding the base layer and the enhancement layer and acquiring broadcast data.

### [Advantageous Effects]

According to the present invention, in a digital broadcast system, it is possible to enhance data transmission efficiency and increase robustness in terms of transmission and reception of broadcast signals, by virtue of provision of a MIMO system.

Further, according to the present invention, it is possible to provide a method and apparatus for transceiving broadcast signals, which can receive digital broadcast signals without error even under an indoor environment or using mobile reception equipment.

Furthermore, according to the present invention, even in the case in which transmission paths or channels are similar to each other in a MIMO broadcast system, it is possible to recover and use a broadcast service, by virtue of provision of SVC technologies.

In addition, according to the present invention, a broadcast system using MIMO of the present invention can achieve the above described advantages while maintaining compatibility with a conventional broadcast system not using MIMO, by virtue of arranging MIMO broadcast signals which are SVC encoded per PLP or per frame.

### [Description of Drawings]

FIG. 1 is a conceptual diagram showing a MIMO transmission system using SVC according to a first embodiment of the present invention.

FIG. 2 is a conceptual diagram showing a MIMO transmission system using SVC according to a second embodiment of the present invention.

FIG. 3 is a conceptual diagram showing a MIMO transmission system using SVC according to a third embodiment of the present invention.

FIG. 4 is a diagram showing P1 signaling information transmitted to a P1 symbol, as L1 signaling information according to an embodiment of the present invention.

FIG. 5 shows information defining the case in which a field value of an S1 field is 010 among P1 signaling information, as L1 signaling information according to an embodiment of the present invention.

FIG. 6 shows fields defining whether or not preambles have the same transmission type, as L1 signaling information according to an embodiment of the present invention.

FIG. 7 shows L1 post signaling information identifying a PLP type, as L1 signaling information according to an embodiment of the present invention.

FIG. 8 shows L1 post signaling information identifying a coding rate, as L1 signaling information according to an embodiment of the present invention.

FIG. 9 shows L1 post signaling information identifying a modulation scheme, as L1 signaling information according to an embodiment of the present invention.

FIG. 10 is a conceptual diagram showing a method for transceiving broadcast signals according to an embodiment of the present invention.

FIG. 11 is a conceptual diagram showing a method for transceiving broadcast signals according to another embodiment of the present invention.

FIG. 12 is a diagram showing broadcast signals transmitted by a broadcast system, to which a MIMO transmission system using SVC is applied, according to an embodiment of the present invention.

FIG. 13 is a diagram showing broadcast signals transmitted by a broadcast system, to which a MIMO transmission system using SVC is applied, according to another embodiment of the present invention.

FIG. 14 is a diagram showing broadcast signals transmitted by a broadcast system, to which a MIMO transmission system using SVC is applied, according to a further embodiment of the present invention.

FIG. 15 is a diagram showing a digital broadcast transmitter according to an embodiment of the present invention.

FIG. 16 is a diagram showing a digital broadcast receiver according to an embodiment of the present invention.

FIG. 17 is a diagram showing a digital broadcast transmitter according to another embodiment of the present invention.

FIG. 18 is a diagram showing a digital broadcast receiver according to another embodiment of the present invention.

FIG. 19 is a flowchart showing a method for transmitting broadcast signals by a digital broadcast transmitter according to an embodiment of the present invention.

FIG. 20 is a flowchart showing a method for receiving broadcast signals by a digital broadcast receiver according to an embodiment of the present invention.

### [Best Mode]

Hereinafter, although the preferred embodiments of the present invention will be described in detail with reference to the accompanying drawings and contents as described with relation to the accompanying drawings, it is to be understood that the present invention is not limited to the embodiments.

All terms used in the following description are selected from among general terms that are currently widely used while taking into consideration the functions obtained in accordance with the present invention. The terms, however, may be changed based on the intensions of those skilled in the art or customs, or the appearance of new technologies. In addition, in particular cases, the terms arbitrarily selected by the applicant of the invention are used. In this case, the meaning of the terms will be described in the corresponding context of describing the terms. Accordingly, it is noted that the terms used herein are not interpreted simply using names of the terms, but interpreted based on actual meanings of the terms and the content of the entire description of the present invention.

In a digital broadcast system, enhancing data transmission efficiency is a very important issue. Thus, in a digital broadcast system, Multiple Input Multiple Output (MIMO) technologies have been proposed as a scheme to enhance data transmission efficiency using a plurality of transmit and receive antennas.

MIMO technologies may generally be classified into a spatial diversity method which reduces occurrence of transmission error and increases a power gain at a receiving end, and a spatial multiplexing method which directly effects enhancement of data transmission efficiency. In brief, the spatial diversity method includes transmitting the same signal to a plurality of antennas and summing signals received at receivers to acquire a power gain of the signals. This method is also applicable to Multiple Input Single Output (MISO) technologies, in addition to MIMO technologies. The spatial multiplexing method includes transmitting signals containing different data from, for example, a first transmit antenna and a second transmit antenna, and receiving the signals, respectively, at a first receive antenna and a second receive antenna to recover the transmitted data.

Performance of a MIMO system depends on characteristics of transmit channels. According to characteristics of paths from antennas at a transmitting end to antennas at a receiving end, i.e. if transmitting and receiving channels are independent channels irrespective of each other, the MIMO system can achieve greater performance. In other words, under a channel environment in which channels of transmitting and receiving paths have high interrelationship, such as a Line Of Sight (LOS) environment, the MIMO system may suffer from rapid performance deterioration, or may operate abnormally. This may further be worsened, in particular, in the spatial multiplexing method.

In the case of a communication system, bidirectional communication between a transmitting system and a receiving system is possible. The transmitting system can monitor conditions of channels with respect to a downlink (a communication path from the transmitting system to the receiving system) and an uplink (a communication path from the receiving system to the transmitting system). Thus, if a channel environment unsuitable for the MIMO system, such as a LOS environment, is detected, it is possible to take an appropriate action, for example, by changing a transmission method.

In the case of a broadcast system, although bidirectional communication has become possible in recent years, communication is somewhat concentrated on the downlink due to characteristics of broadcast, and there exists even a network environment in which communication of the uplink is frequently difficult or impossible. When applying a MIMO technology to the broadcast system, it is difficult to prevent deterioration in the broadcast communication performance of a system depending on channel conditions.

Additionally, when applying a MIMO scheme to a broadcast system which has used a Multiple Input Single Output scheme or a Single Input Single Output (SISO) scheme, although data transmission efficiency may be enhanced, it is necessary to maintain compatibility to ensure that even a receiver having a single antenna can receive a broadcast service, in addition to the above described problems. The present invention is intended to solve such problems and other tasks of current technologies.

First, the present invention proposes a MIMO system using Scalable Video Coding (SVC). SVC is a coding method that has been developed to cope with a variety of terminals and communication environments as well as changes thereof. More particularly, SVC is a video coding method in which images having a plurality of different resolutions, qualities and frame rates can be adaptively restored from a compressed bit stream in a variety of devices or under a variety of network environments.

SVC performs hierarchical video coding to generate a desired image quality, so that a base layer can transmit video data with respect to a basic quality of images and an enhancement layer can transmit additional video data capable of restoring high quality images. A receiver may acquire a basic quality of images by receiving and decoding only video data of the base layer, or may acquire a high rank quality of images by receiving and decoding video data of the enhancement layer as well as video data of the base layer. In the following description, the base layer may include video data corresponding to the base layer, and the enhancement layer may include video data corresponding to the enhancement layer. Additionally, in the following description, it is noted that a processing object of SVC may not be limited only to video data, the base layer may include data capable of providing a basic service including a basic image/sound/data corresponding to the base layer, and the enhancement layer may include data capable of providing a high rank of service including a high rank of image/sound/data corresponding to the enhancement layer.

In a broadcast system of the present invention, it is proposed that SVC is used such that the base layer of SVC is transmitted through a path on which the base layer can be received in an SISO or MISO scheme and the enhancement layer of SVC is transmitted through a path on which the enhancement layer can be received in a MIMO scheme. More particularly, the present invention proposes a method in which a receiver having a single antenna can acquire a basic quality of images by receiving the base layer in an SISO or MISO scheme and a receiver having a plurality of antennas can acquire a high rank quality of images by receiving the base layer and the enhancement layer in a MIMO scheme. Objects of this method are not only to increase the transmission capacity of a MIMO system, but also to overcome problems of MIMO actions depending on receiving paths and receivers by adopting SVC with respect to receiving paths over which MIMO reception is impossible.

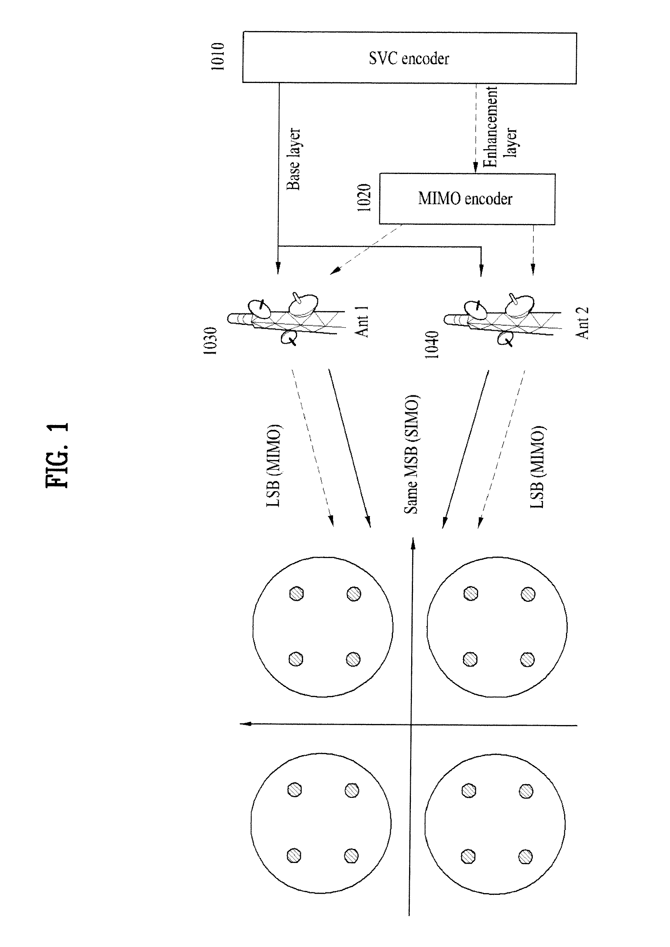

FIG. 1 is a conceptual diagram showing a MIMO transmission system using SVC according to a first embodiment of the present invention.

In FIG. 1, the transmission system includes an SVC encoder 1010 for SVC encoding a broadcast service, and a MIMO encoder 1020 for distributing data via a spatial diversity method or a spatial multiplexing method to ensure that the data can be transmitted to a plurality of antennas. In the following description, the MIMO encoder may be referred to as a MIMO processor. FIG. 1 shows the transmission system using hierarchical modulation.

The SVC encoder 1010 performs SVC encoding of a broadcast service to output a base layer and an enhancement layer. The base layer is transmitted equally from a first antenna Ant 1; 1030 and a second antenna Ant 2; 1040. The enhancement layer is encoded in the MIMO encoder 1020 so that different data are transmitted to the first antenna 1030 and the second antenna 1040, respectively. In this case, the transmission system performs symbol mapping during modulation of data. The symbol mapping is shown at the left side of the drawing (a symbol mapper is not shown).

The transmission system performs hierarchical modulation, so that bits corresponding to the base layer can be mapped to a Most Significant Bit (MSB) part of data to be modulated and bits corresponding to the enhancement layer can be mapped to a Least Significant Bit (LSB) part of the data. That is, upon Quadrature Amplitude Modulation (QAM) as shown in FIG. 1, the base layer may be assigned to the MSB part so as to be transmitted in a constellation, such as Quadrature Phase Shift Keying (QPSK) (corresponding to large circles on quadrants at the left side of FIG. 1), and the enhancement layer may be assigned to the LSB part so as to be transmitted in a constellation, such as QAM, (corresponding to small circles of each quadrant at the left side of FIG. 1). Alternatively, bits corresponding to the enhancement layer may be mapped to the MSB part of data to be modulated, and bits corresponding to the base layer may be mapped to the LSB part of the data. In this case, the base layer may be repeatedly transmitted in common from a plurality of transmit antennas, thereby having a Signal to Noise Ratio (SNR) gain, and the enhancement layer may have an SNR gain transmitted to the MSB part, which can result in distribution of robustness between the two layers.

A receiving system may acquire data corresponding to the base layer and data corresponding to the enhancement layer, which are separated from each other, from demodulated bit data using a QAM symbol demapper. The data corresponding to the enhancement layer may be acquired using bit data of final SVC by way of MIMO decoding. If it is impossible to separate bit data corresponding to a MIMO scheme, the receiving system may provide a broadcast service based on only a base layer of the corresponding service using only bit data corresponding to an SISO or MISO scheme.

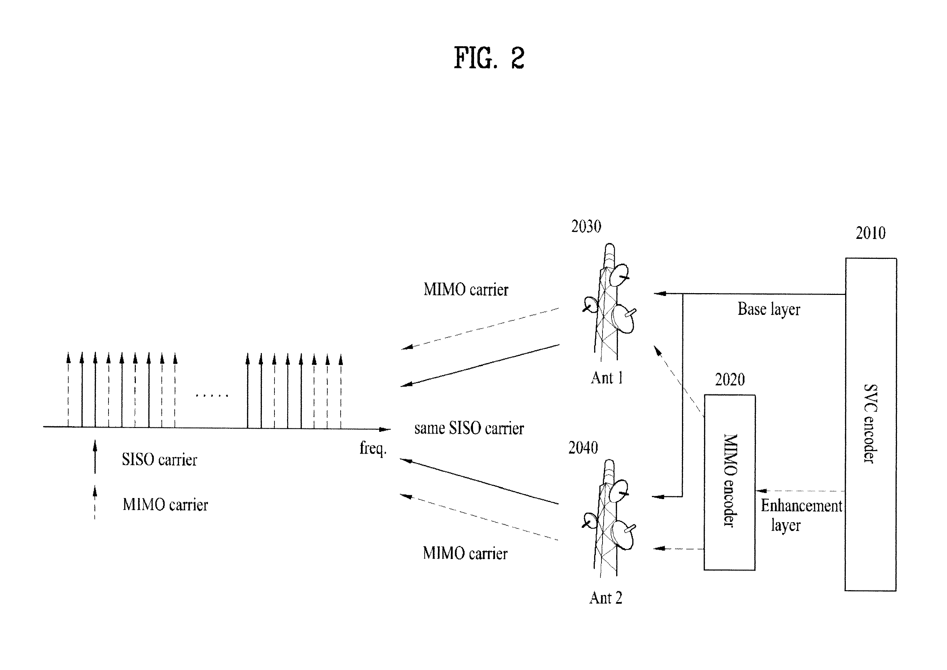

FIG. 2 is a conceptual diagram showing a MIMO transmission system using SVC according to a second embodiment of the present invention.

In FIG. 2, the transmission system includes an SVC encoder 2010 for SVC encoding a broadcast service, and a MIMO encoder 2020 for distributing data via a spatial diversity method or a spatial multiplexing method to ensure that the data can be transmitted to a plurality of antennas. In the embodiment shown in FIG. 2, the transmission system uses a hybrid modulation or Frequency Division Multiplexing (FDM) method.

The SVC encoder 2010 performs SVC encoding of a broadcast service to output a base layer and an enhancement layer. The base layer is transmitted equally from a first antenna Ant 1; 2030 and a second antenna Ant 2; 2040. The enhancement layer is encoded in the MIMO encoder 2020 so that different data are transmitted to the first antenna 2030 and the second antenna 2040, respectively.

The transmission system may process data using FDM in order to enhance data transmission efficiency. In particular, the transmission system may transmit data through a plurality of sub-carriers using Orthogonal Frequency Division Multiplexing (OFDM). In the transmission system using OFDM, the sub-carriers may be divided into sub-carriers which are used to transmit SISO or MISO signals, and sub-carriers which are used to transmit MIMO signals, so as to transmit the signals respectively. The base carrier, output from the SVC encoder 2010, may be equally transmitted from a plurality of antennas through an SISO or MISO carrier, and the enhancement layer may be transmitted from a plurality of antennas through a MIMO carrier after MIMO encoding.

A receiving system is adapted to receive an OFDM symbol so that the receiving system may acquire a base layer by SISO or MISO decoding data corresponding to the SISO or MISO carrier and may acquire an enhancement layer by MIMO decoding data corresponding to the MIMO carrier. Thereafter, based on channel conditions and characteristics of the receiving system, recovery and provision of a broadcast service may be accomplished via only the base layer if MIMO decoding is impossible, and may be accomplished via the enhancement layer as well as the base layer if MIMO decoding is possible. In the second embodiment, since MIMO processing is performed after bit data of a service is mapped to a symbol, the MIMO encoder 2020 may be located after a symbol mapper, which may provide a more simplified configuration of a receiver than in the first embodiment.

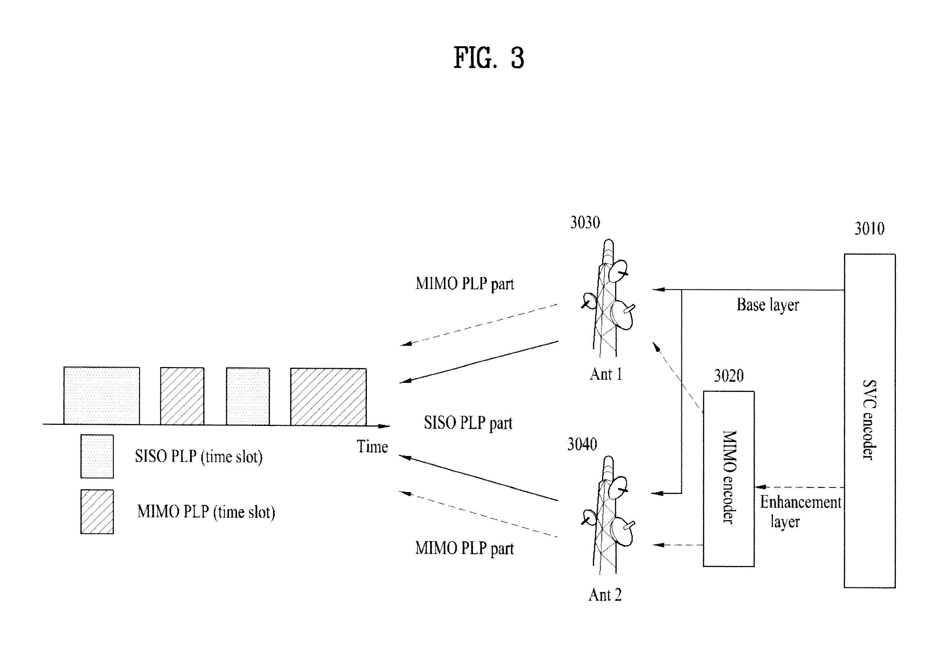

FIG. 3 is a conceptual diagram showing a MIMO transmission system using SVC according to a third embodiment of the present invention.

In FIG. 3, the transmission system includes an SVC encoder 3010 for SVC encoding a broadcast service, and a MIMO encoder 3020 for distributing data via a spatial diversity method or a spatial multiplexing method to ensure that the data can be transmitted to a plurality of antennas. In the embodiment shown in FIG. 3, the transmission system uses a hierarchical Physical Layer Pipe (PLP) or Time Division Multiplexing (TDM) method.

In the embodiment of FIG. 3, the transmission system may transmit a base layer and an enhancement layer, which are SVC encoded through SISO or MISO slots and MIMO slots, respectively. The slots may be slots per time or frequency of transmitting signals. In the embodiment of FIG. 3, the slots are shown as time slots. In addition, the slots may be Physical Layer Pipes (PLPs).

Each service may be transmitted and received through a plurality of Radio Frequency (RF) channels. A path on which the service is transmitted, or a stream that is transmitted through the path is referred to as a PLP. A PLP may be located in slots distributed at time intervals on a plurality of RF channels, or may be distributed at time intervals on a single RF channel. A signal frame may transmit a PLP distributed at time intervals on at least one RF channel. In other words, a single PLP may be distributed at time intervals on a single RF channel or a plurality of RF channels to thereby be transmitted through the channel(s).

The PLP is a unit of data that can be identified in a physical layer, and data is processed on the same transmission path on a per PLP basis. More specifically, the PLP is data having the same physical layer properties processed on a transmitting path, and may be mapped per cell within a frame. The PLP may be defined as a TDM channel on a physical layer that is carried as a cell.

A receiving system recognizes the kind of received slots, and receives the base layer from the SISO or MISO slots and the enhancement layer from the MIMO slots. As described above, based on channel conditions or characteristics of a receiver, the receiving system may recover a service using only the base layer, or may recover a service using both the base layer and the enhancement layer via MIMO decoding.

Hereinafter, assuming that the MIMO transmission system according to any one of the above described first to third embodiments is realized, a method of preventing malfunction of a conventional terrestrial transmission system and allowing the MIMO transmission system to be compatible with a conventional receiver will be described. In the following description of exemplary embodiments, the conventional transmission system is referred to as a terrestrial transmission system or a terrestrial broadcast system, and a system (SVC + MIMO) added according to the first to third embodiments is referred to as a MIMO transmission system or a MIMO broadcast system.

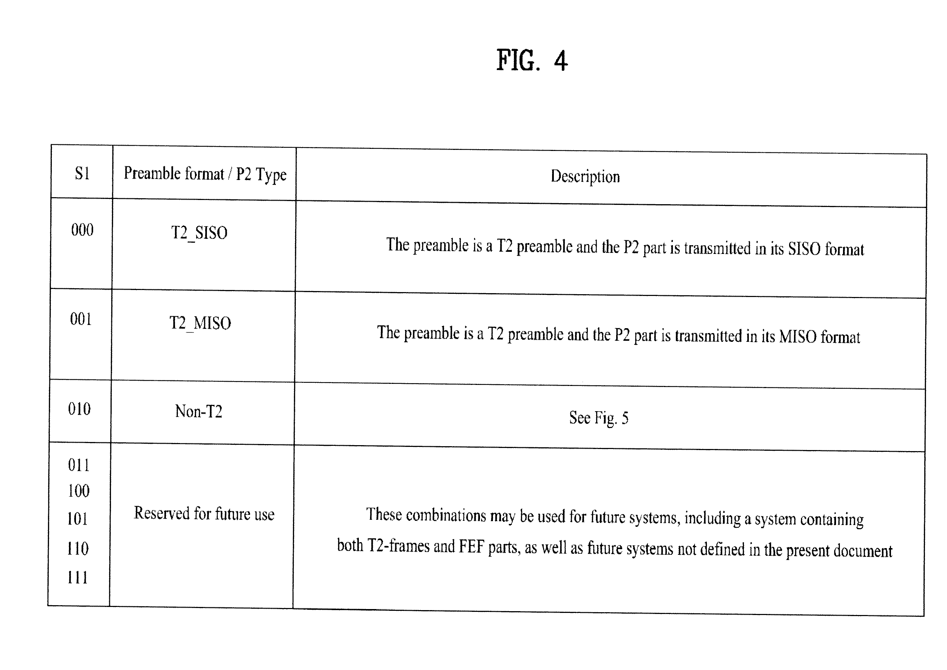

FIGs. 4 to 6 show signaling information of a terrestrial broadcast system according to an embodiment of the present invention.

The terrestrial broadcast system supports an SISO scheme and a MISO scheme, and may transmit data per frame. The terrestrial broadcast system may inform the format of signals that are in the current transmission as shown in FIGS. 4 to 6 via Layer 1 (L1) signaling information that is transmitted as preamble signals.

The L1 signaling information provides information for assisting a receiver in processing a PLP within a T2 frame. The L1 signaling information may be divided into three sections, i.e. P1 signaling information, L1 pre signaling information, and L2 post signaling information.

The P1 signaling information carried by a P1 symbol represents a transmission type and basic transmission parameters.

The L1 pre signaling information and the L1 post signaling information may be carried by a P2 symbol. The L1 pre signaling information includes information required to assist the receiver in receiving and decoding L1 post signaling information. The L1 post signaling information includes parameters required to assist the receiver in accessing the PLP.

FIG. 4 is a diagram showing PI signaling information transmitted to a Pl symbol, as L1 signaling information according to an embodiment of the present invention. The P1 symbol represents P1 signaling information, and the P1 signaling information represents information on the type of the P2 symbol. A receiving system may identify a preamble format (whether or not a preamble corresponds to a terrestrial broadcast system) and the format of a P2 symbol part based on a field value of an S1 field. In the present invention, signals of the MIMO broadcast system may be transmitted in a state in which field values from 010 to 111 are assigned to the signals.

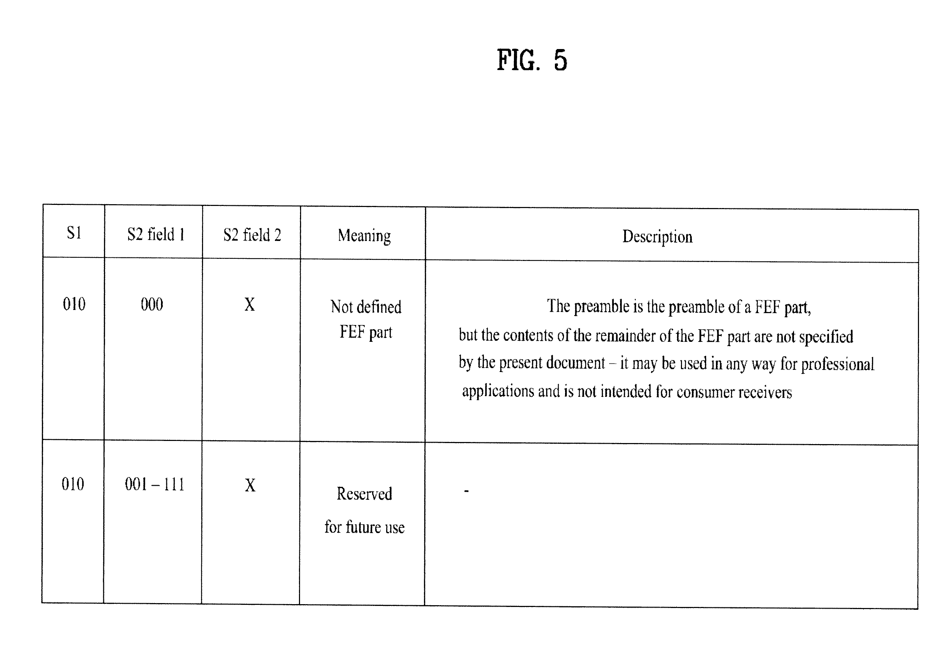

FIG. 5 shows information defining the case in which the field value of the S1 field is 010 among P1 signaling information, as Li signaling information according to an embodiment of the present invention. Properties of a Future Extension Frame (FEF) may be represented based on the field value.

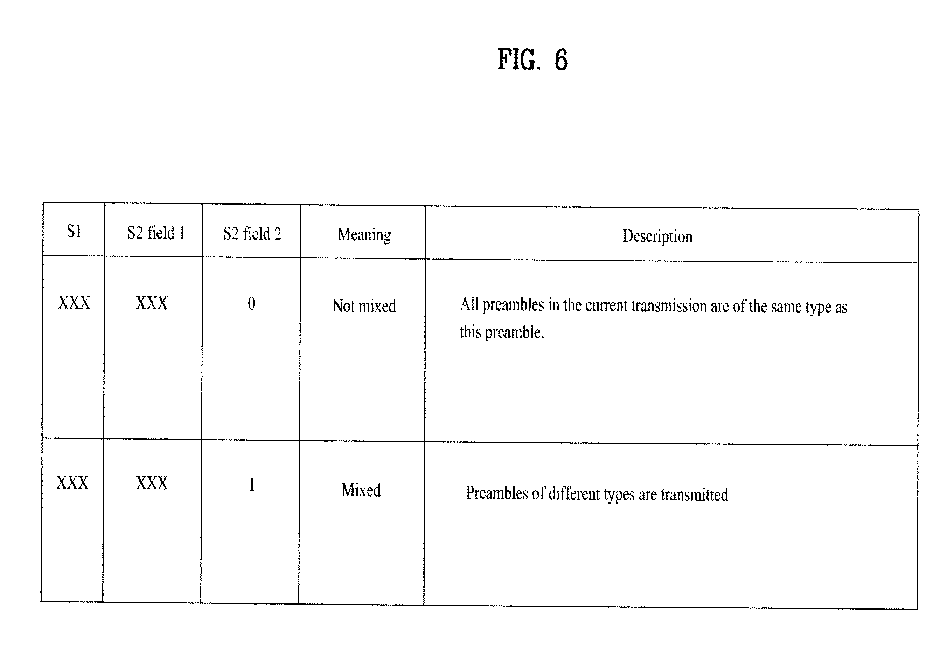

FIG. 6 shows fields defining whether or not preambles have the same transmission type, as L1 signaling information according to an embodiment of the present invention. In the P1 signaling information shown in FIG. 6, a field value of an S2 field 2 included in the P1 signaling information may represent whether all preambles in the current transmission are of the same type as this preamble, or a mixture of preambles of different types are transmitted.

As shown in FIGs. 4 to 6, a terrestrial broadcast system may define a system or signals that are in the current transmission based on signaling information of a P1 symbol that is present at a front end of a frame. In the terrestrial broadcast system, systems of several types may be considered when it is desired to additionally transmit MIMO broadcast signals.

First, there is a method of informing, based on signaling information, that all frames in the current transmission are terrestrial broadcast frames, thereby preventing a conventional receiver from recognizing MIMO broadcast signals. Secondly, there is a method of informing, based on signaling information, that some frames in the current transmission are terrestrial broadcast frames and some frames are MIMO broadcast frames containing MIMO broadcast signals, thereby allowing a MIMO system to coexist with a terrestrial broadcast system. Finally, there is a method of informing, based on signaling information, that all frames are MIMO frames, thereby preventing a conventional receiver from recognizing MIMO broadcast signals. In one embodiment, when using FEFs contained in terrestrial broadcast signals, Pl signaling information of MIMO broadcast frames may represent that an S1 field value is 010 or within a range of 011∼111 in FIG. 4.

In the following description, methods for adding MIMO signals to FEFs defined for future use in a terrestrial system and defining a relationship between a conventional terrestrial broadcast frame and a MIMO broadcast frame will be described.

In the above first to third embodiments, the method in which a base layer and an enhancement layer are produced via SVC, and the base layer and the enhancement layer are transmitted respectively by an SISO, MISO or MIMO scheme has been described. The base layer and the enhancement layer, which are transmitted as described above, correspond to MIMO broadcast data. In the following description, it will be described how MIMO broadcast data including the base layer and the enhancement layer is transmitted in relation with terrestrial broadcast frames. In the following description, it should be noted that the MIMO broadcast data including the base layer and the enhancement layer may be produced by one of the first to third embodiments, and also may be produced by a combination of one or more ones of the embodiments.

(1) Method of transmitting MIMO broadcast data to a specific PLP

A method of adding MIMO broadcast data produced as described above to a specific PLP and transmitting the PLP containing the MIMO broadcast data differentially from a PLP containing terrestrial broadcast data is possible. In this case, the specific PLP is used to transmit MIMO broadcast data, and it is possible to prevent malfunction of a conventional receiving system by signaling optional data with respect to the specific PLP. In the following description, the specific PLP including MIMO broadcast data may be referred to as a MIMO broadcast PLP, and the PLP including terrestrial broadcast data may be referred to as a terrestrial broadcast PLP.

Since a terrestrial broadcast receiver may fail to process MIMO broadcast data, it is necessary to perform signaling of optional information for distinguishing between the terrestrial broadcast PLP and the MIMO broadcast PLP. In this case, the signaling may use reserved fields within L1 signaling information of a terrestrial broadcast system. When transmitting MIMO broadcast data from a transmitting end to a plurality of antennas, even existing terrestrial broadcast data may be transmitted according to a MISO scheme. As shown in FIG. 4, a field value of an S1 field may be 000 or 001 upon transmission of terrestrial broadcast data, and may be within a range of 010 to 111 upon transmission of MIMO broadcast data. However, when transmitting terrestrial broadcast according to a MISO scheme, due to arrangement characteristics of pilot carriers, the maximum delay time of an impulse response that can be measured by a receiver is disadvantageously lowered to a half of the same mode of an SISO scheme. For this reason, there may be a problem in that increased network density is necessary.

L1 post signaling information may be used to identify a PLP type.

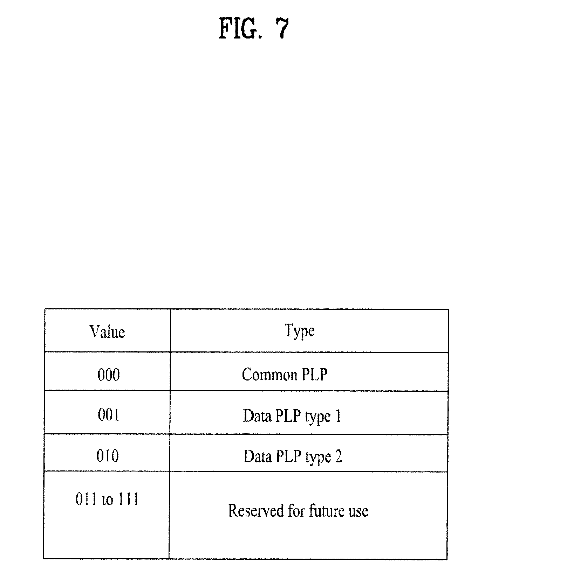

FIG. 7 shows L1 post signaling information identifying a PLP type, as L1 signaling information according to an embodiment of the present invention.

Table of FIG. 7 may be included in a PLP_TYPE field of L1 post signaling information. In one embodiment, a field value of 000 may be assigned to a terrestrial broadcast PLP, and any one field value within a range of 001 to 111 may be assigned to a MIMO broadcast PLP, to assist a receiving system in identifying a PLP type.

To acquire reinforced robustness upon transmission of a PLP, a new modulation method and a coding rate of an error correction code may be used. In this case, L1 post signaling information may be used to identify the modulation method and the coding rate of the error correction code.

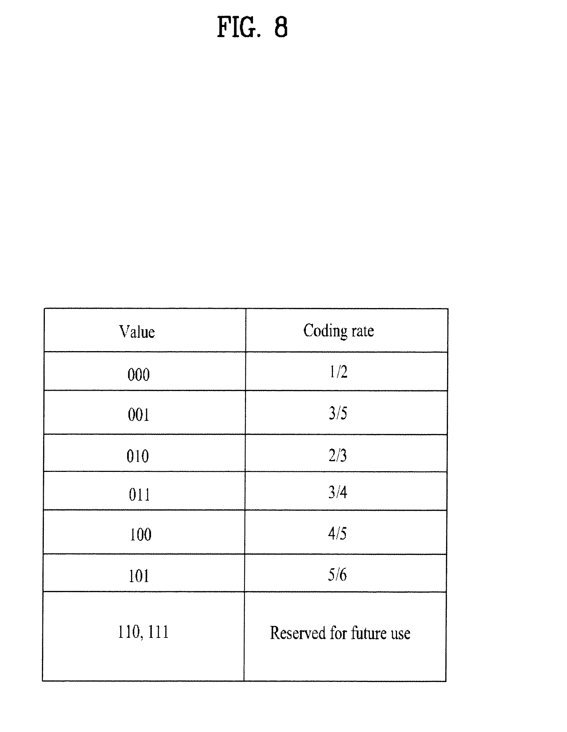

FIG. 8 shows L1 post signaling information identifying a coding rate, as L1 signaling information according to an embodiment of the present invention.

Table of FIG. 8 may be included in a PLP_COD field of L1 post signaling information. In one embodiment, a new coding rate may be defined as a field value of 110 or 111 and may be used to identify a coding rate of a MIMO broadcast PLP. If Table of FIG. 8 is insufficient for combinations of additionally required coding rates, a field RESERVED_1 for future use in a PLP loop of L1 post signaling information may be additionally used.

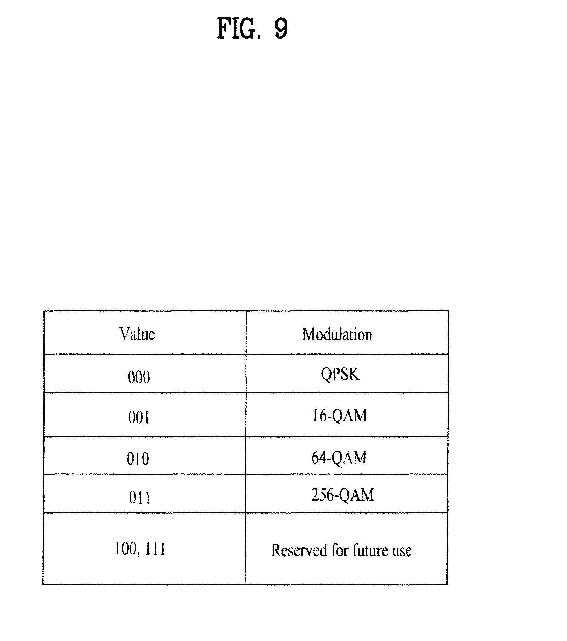

FIG. 9 shows L1 post signaling information identifying a modulation method, as L1 signaling information according to an embodiment of the present invention.

Table of FIG. 9 may be included in a PLP_MOD field of L1 post signaling information. In one embodiment, a new modulation method may be defined in a field value within a range of 100 to 111 and may be used to identify a modulation method of a MIMO broadcast PLP.

(2) Method of transmitting MIMO broadcast data to a specific frame

A method of adding MIMO broadcast data produced as described above to a specific frame and transmitting the frame containing the MIMO broadcast data differentially from a frame containing terrestrial broadcast data is possible. In this case, the specific frame is used to transmit MIMO broadcast data, and it is possible to prevent malfunction of a conventional receiving system by signaling optional data with respect to the specific frame. In the following description, the specific frame including MIMO broadcast data may be referred to as a MIMO broadcast frame, and the frame including terrestrial broadcast data may be referred to as a terrestrial broadcast frame. Further, the MIMO broadcast frame may be included in the above described FEF of the terrestrial broadcast system, and the FEF may hereinafter be referred to as the MIMO broadcast frame.

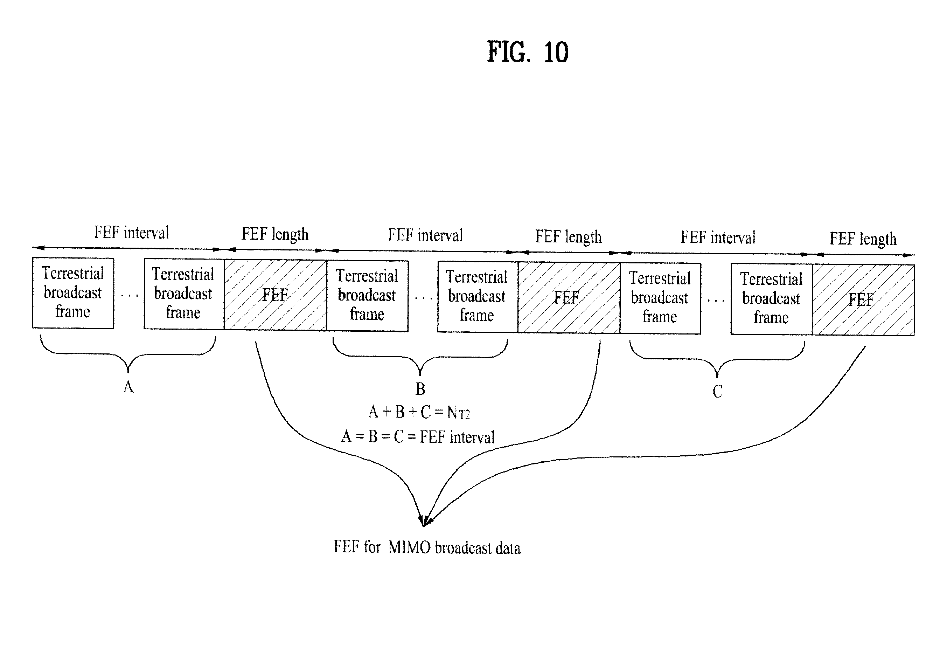

FIG. 10 is a conceptual diagram showing a method for transceiving broadcast signals according to an embodiment of the present invention.

As shown in FIG. 10, terrestrial broadcast data and MIMO broadcast data may be differentiated from each other and be transmitted per frame, and MIMO broadcast frames (FEFs) having a constant length (FEF's length) may be arranged at a constant interval (FEF's interval) between terrestrial broadcast frames. In this case, data of a MIMO system may coexist within a frequency band that is a use frequency band of a terrestrial broadcast system, and a terrestrial broadcast receiver may identify the terrestrial broadcast frames via L1 signaling to neglect the MIMO broadcast frames, which may prevent malfunction thereof. In this case, in one embodiment, a MIMO system may use a part of throughput within a corresponding band via FEF related parameters (FEF_TYPE, FEF_LENGTH, and FEF_INTERVAL) defined in L1 post signaling information of a terrestrial broadcast system.

(3) Method of transmitting MIMO broadcast PLPs to a terrestrial broadcast frame and a MIMO broadcast frame

It is possible to transmit PLPs including MIMO broadcast data through a terrestrial broadcast frame and a MIMO broadcast frame. Differently from the above embodiments, in consideration of the fact that a MIMO broadcast PLP is present even in a terrestrial broadcast frame, signaling a relationship between a PLP present in a terrestrial broadcast frame and a PLP present in a MIMO broadcast frame, which are connected to each other, is necessary. To this end, even the MIMO broadcast frame may include L1 signaling information, and information on a MIMO broadcast PLP present in a frame may be transmitted along with L1 signaling information of a terrestrial broadcast frame.

Connection between the MIMO broadcast PLPs present in the different frames may be accomplished using fields with respect to PLPs included in L1 post signaling information, i.e. L1 signaling information of the respective frames. In one embodiment, a receiving system may acquire a service by confirming a connection relationship between the MIMO broadcast PLPs included in the different frames using information included in L1 post signaling information, i.e. at least one of PLP_ID information, PLP_TYPE information, PLP_PAYLOAD_TYPE information and PLP_GROUP_ID information, and successively decoding the desired MIMO broadcast PLPs.

A terrestrial broadcast PLP present in the terrestrial broadcast frame may be transmitted in a transmission mode that is predefined in and supported by the terrestrial broadcast system. In addition, as described above, the terrestrial broadcast PLP may be transmitted in a new mode that supports the MIMO system. In one embodiment, as described above, the MIMO broadcast PLP included in the terrestrial broadcast frame is a base layer and may be transmitted in a terrestrial broadcast transmission mode by a MISO or SISO scheme, and the MIMO broadcast PLP included in the MIMO broadcast frame is an enhancement layer and may be transmitted according to a MIMO scheme.

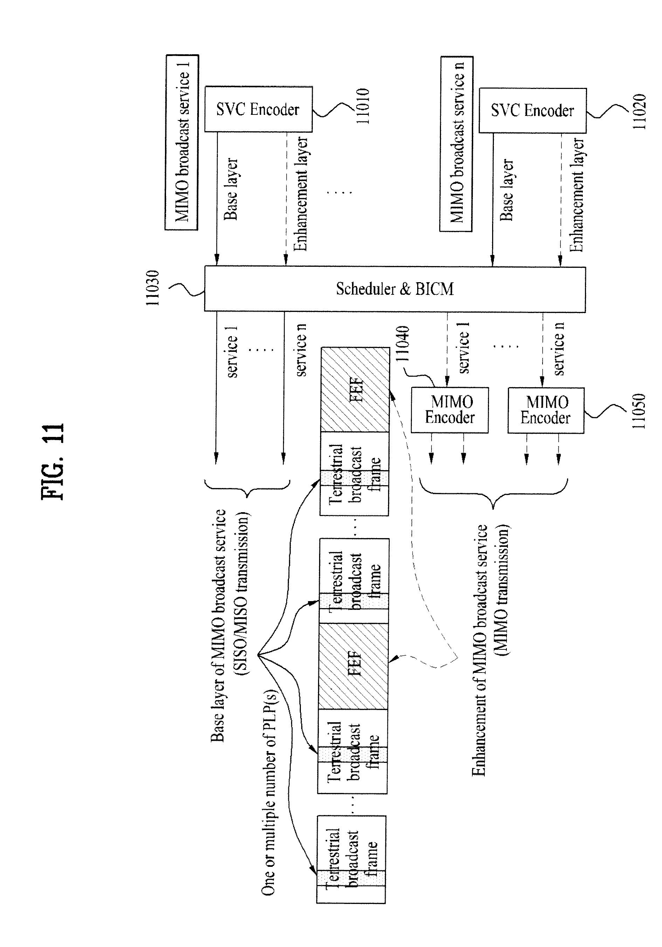

FIG. 11 is a conceptual diagram showing a method for transceiving broadcast signals according to another embodiment of the present invention.

FIG. 11 illustrates an embodiment in which a terrestrial broadcast system transmits broadcast signals of a MIMO broadcast system as described above in relation to the method (3). MIMO broadcast services 1 to n are encoded into a base layer and an enhancement layer, respectively, via SVC encoders 11010 and 11020. A scheduler & Bit Interleaved Coding and Modulation (BICM) module 11030 may assign the base layers of the MIMO broadcast services so that the base layers are transmitted along with terrestrial broadcast frames, and also may assign the enhancement layers so that the enhancement layers are transmitted while being included in MIMO broadcast frames. The enhancement layers are respectively subjected to MIMO encoding via MIMO encoders 11040 and 11050, thereby being transmitted in MIMO broadcast frames of a MIMO broadcast system. The base layers may be transmitted while being included in the terrestrial broadcast frames. In this case, the base layers may be transmitted according to an SISO or MISO scheme that is supported by the terrestrial broadcast system.

In the case in which broadcast signals including the terrestrial broadcast frames and the MIMO broadcast frames are transmitted, signaling information is constructed as described above with relation to methods (1) to (3). Therefore, since a terrestrial broadcast receiver can identify only a terrestrial broadcast PLP in the terrestrial broadcast frames, it is possible to acquire and provide a terrestrial broadcast service without malfunction. In addition, a MIMO broadcast receiver may acquire and provide a MIMO broadcast service corresponding to the base layers only using a MIMO broadcast PLP of the terrestrial broadcast frames. By acquiring the MIMO broadcast PLP of the terrestrial broadcast frames and the MIMO broadcast PLP of the MIMO broadcast frames, a MIMO broadcast service corresponding to the base layers and the enhancement layers may be acquired and provided.

The MIMO broadcast PLP included in the terrestrial broadcast frames may be transmitted according to only a MISO or SISO scheme. In this case, the MIMO broadcast PLP may include coding rates of new error correction codes (for example, 1/4, 1/3, and 2/5), new time interleaving modes, and the like, according to system demands, and may transmit only the base layers.

One or more SISO, MISO, and MIMO type PLPs may be present in the MIMO broadcast PLP included in the MIMO broadcast frames. In this case, the base layers may be transmitted to the SISO and MISO PLPs or carriers, and the enhancement layers may be transmitted to the MIMO type PLPs or carriers. A ratio of the SISO and MISO type PLPs or carriers to the MIMO type PLPs or carriers is variable within a range of 0 to 100%. This ratio may be differently set on a per frame basis.

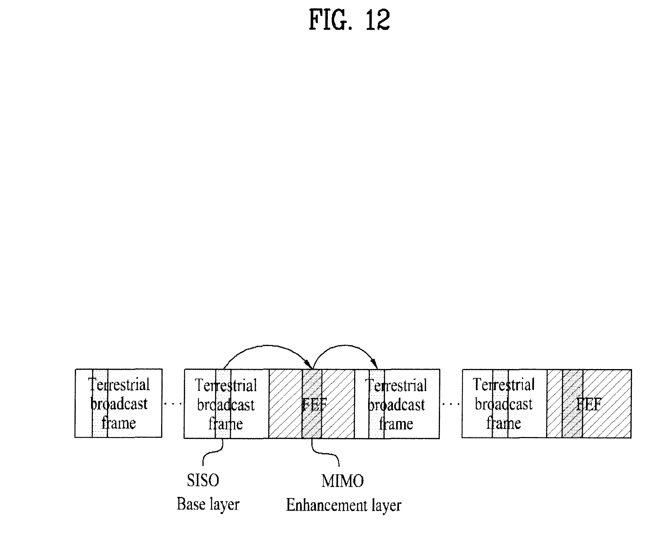

FIGs. 12 to 14 are diagrams representing broadcast signals transmitted from a terrestrial broadcast system, to which the above described MIMO transmission system using SVC is applied according to an embodiment of the present invention.

In the embodiment shown in FIGs. 12 to 14, after a base layer and an enhancement layer are produced using SVC, as described above, broadcast signals, in which terrestrial broadcast data and MIMO broadcast data are assigned to frames or PLPs transmitted, are transmitted. That is, FIGs. 12 to 14 correspond to an embodiment of broadcast signals using at least one of the methods (1) to (3) as well as the methods as described above in relation to FIGs. 1 to 3.

FIG. 12 is a diagram showing broadcast signals transmitted by a broadcast system, to which a MIMO transmission system using SVC is applied, according to an embodiment of the present invention.

In FIG. 12, a broadcast system transmits broadcast signals including terrestrial broadcast frames and MIMO broadcast frames. In the embodiment of FIG. 12, a MIMO broadcast PLP may be present in each of the terrestrial broadcast frames and the MIMO broadcast frames. The MIMO broadcast PLP included in the terrestrial broadcast frame is a base layer and may be transmitted according to an SISO or MISO scheme, and the MIMO broadcast PLP included in the MIMO broadcast frame is an enhancement layer and may be transmitted according to an SISO, MISO, or MIMO scheme.

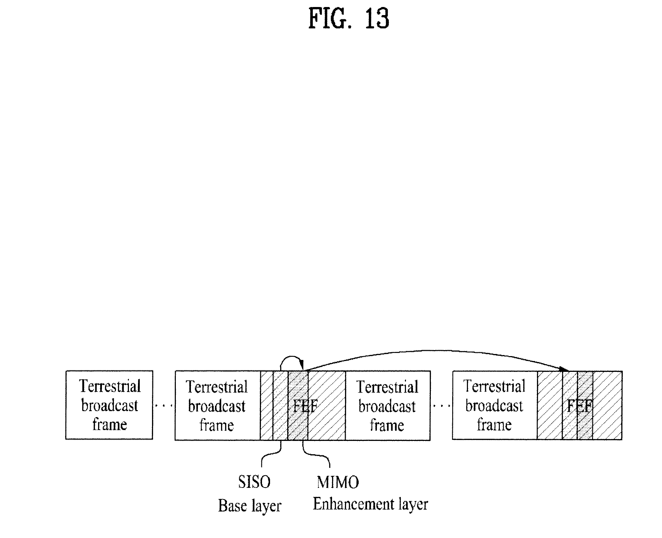

FIG. 13 is a diagram showing broadcast signals transmitted by a broadcast system, to which a MIMO transmission system using SVC, is applied according to another embodiment of the present invention.

In FIG. 13, a broadcast system transmits broadcast signals including terrestrial broadcast frames and MIMO broadcast frames. In the embodiment of FIG. 13, a MIMO broadcast PLP may be present only in the MIMO broadcast frame. In this case, the MIMO broadcast PLP may include a PLP including a base layer and a PLP including an enhancement layer. Among the MIMO broadcast PLPs, the PLP including the base layer may be transmitted according to an SISO, MISO, or MIMO scheme, and the PLP including the enhancement layer may be transmitted according to an SISO, MISO, or MIMO scheme. As described above, a ratio of the PLPs including the base layers and the PLPs including the enhancement layers is variable within a range of 0 to 100%.

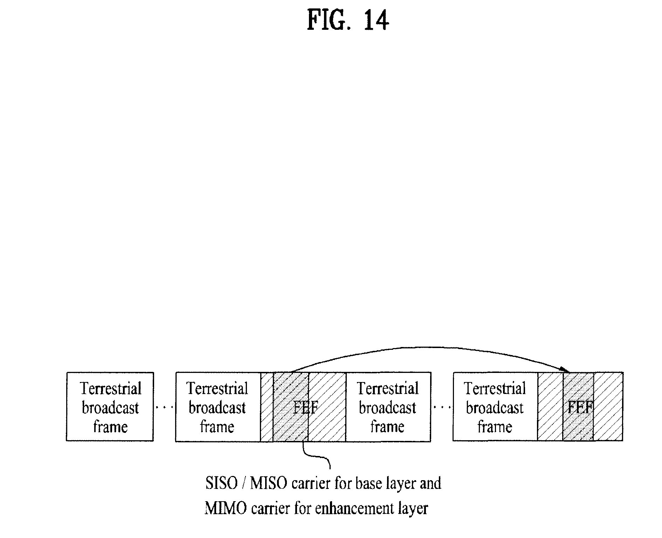

FIG. 14 is a diagram showing broadcast signals transmitted by a broadcast system, to which a MIMO transmission system using SVC is applied, according to a further embodiment of the present invention.

In FIG. 14, a broadcast system transmits broadcast signals including terrestrial broadcast frames and MIMO broadcast frames. MIMO broadcast data is present only in the MIMO broadcast frames. However, differently from the embodiment of FIG. 13, the base layer and the enhancement layer are not differentiated from each other and are not transmitted by a PLP, but may be differentiated from each other and be transmitted by a carrier. That is, as described above with relation to FIG. 2, data corresponding to the base layer and data corresponding to the enhancement layer may be respectively assigned to separate sub-carriers and may be subjected to OFDM modulation to thereby be transmitted.

Hereinafter, a transmitter and a receiver for use in the above described broadcast system will be described.

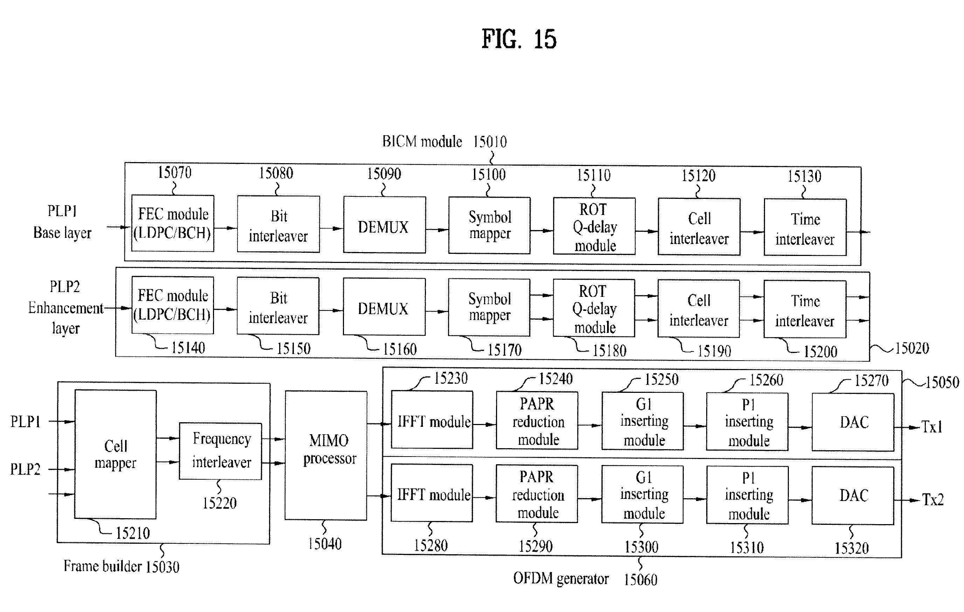

FIG. 15 is a diagram showing a digital broadcast transmitter according to an embodiment of the present invention.

In the embodiment of FIG. 15, the broadcast transmitter transmits a base layer and an enhancement layer which are differentiated from each other and are transmitted by a PLP. Although not shown in FIG. 15, the broadcast transmitter includes an SVC encoder by SVC encoding data into a base layer and an enhancement layer to output the base layer and the enhancement layer. In this case, the base layer may be included in a PLP1, and the enhancement layer may be included in a PLP2.

The broadcast transmitter of FIG. 15 includes BICM modules 15010 and 15020 for Bit Interleaved Coding and Modulation (BICM) processing PLPs, a frame builder 15030 for building frames upon receiving the PLPs, a MIMO processor 15040 for MIMO, MISO or SISO processing data, and OFDM generators 15050 and 15060 for OFDM modulating the frames to generate OFDM signals. The BICM modules include a first BICM module 15010 and a second BICM module 15020. According to embodiments, the number of the BICM modules may be equal to the number of PLPs that are processed in the transmitter. The OFDM generators 15050 and 15060 include a first OFDM generator 15050 and a second OFDM generator 15060. According to embodiments, the number of OFDM generators may be equal to the number of transmit antennas that are provided for MIMO or MISO transmission.

The first BICM module 15010 includes a Forward Error Correction (FEC) module 15070 for encoding PLPs using Bose Chaudhuri Hocquengham (BCH)/ Low Density Parity Check (LDPC) codes, and the like by adding a redundancy for error correction, a bit interleaver 15080 for performing interleaving per bit, a demultiplexer (DEMUX) 15090 for arranging data to reduce a robustness difference generated after symbol mapping and determining the number of bits to be transmitted on a per carrier basis, a symbol mapper 15090 for mapping bit data per symbol, a rotation Q (ROT-Q) delay module 15110 for rotating a symbol mapped constellation to generate cyclic dilemma in an imaginary quantity direction, a cell interleaver 15120 for distributing data cells via interleaving to reduce regulation of an FEC, and a time interleaver 15130 for acquiring diversity in a time region by performing interleaving on a time axis. The second BICM module 15020 includes the same elements 15140 to 15200 as those in the first BICM module 15010, and a description with respect to the same elements 15140 to 15200 will not be repeated.

The frame builder 15030 includes a cell mapper 15210 for assigning the PLPs to cells to construct frames to be transmitted, and a frequency interleaver 15220 for acquiring diversity by interleaving data in a frequency region. L1 signaling information additionally coded along with the PLPs is inserted in the frame builder. In other words, the frame builder may insert L1 pre signaling information including the above described information of FIGs. 7 to 9 during building of the frames.

The MIMO processor 15040 performs MIMO and MISO processing of data to be transmitted according to MIMO and MISO schemes according to data included in the frames output from the frame builder. In this case, the MIMO processor may bypass data to be transmitted according to an SISO scheme, thereby equally outputting the data to the OFDM generators. The MISO processing may process the data via a spatial diversity method, and the MIMO processing may process data via a spatial diversity method or a spatial multiplexing method.

The first OFDM generator 15050 includes an Inverse Fast Fourier Transform (IFFT) module 15230 for performing IFFT on signals to modulate the signals into a plurality of sub-carriers, a Peak to Average Power Ratio (PAPR) reduction module 15240 for reducing PAPR in the modulated OFDM signals using at least one of Active Constellation Extension (ACE) and Tone Reservation (TR), a G1 insertion module 15250 for inserting a guard interval into the OFDM signals, a P1 insertion module 15260 for inserting preambles for L1 signaling information, and a Digital To Analog Converter (DAC) 15270 for converting processed digital signals into analog signals. The second OFDM generator 15060 includes the same elements 15280 to 15320 as those of the first OFDM generators 15050, and a description with respect to the same elements will not be repeated.

The OFDM signals output from the first OFDM generator 15050 may be transmitted through a first antenna Tx1, and the OFDM signals output from the second OFDM generator 15060 may be transmitted through a second antenna Tx2. In this case, the signals to be transmitted according to an SISO scheme may be transmitted as the same signal through all antennas including the first antenna and the second antenna. In the case of MIMO and MISO schemes, the respective antennas may transmit different signals according to MIMO and MISO algorithms.

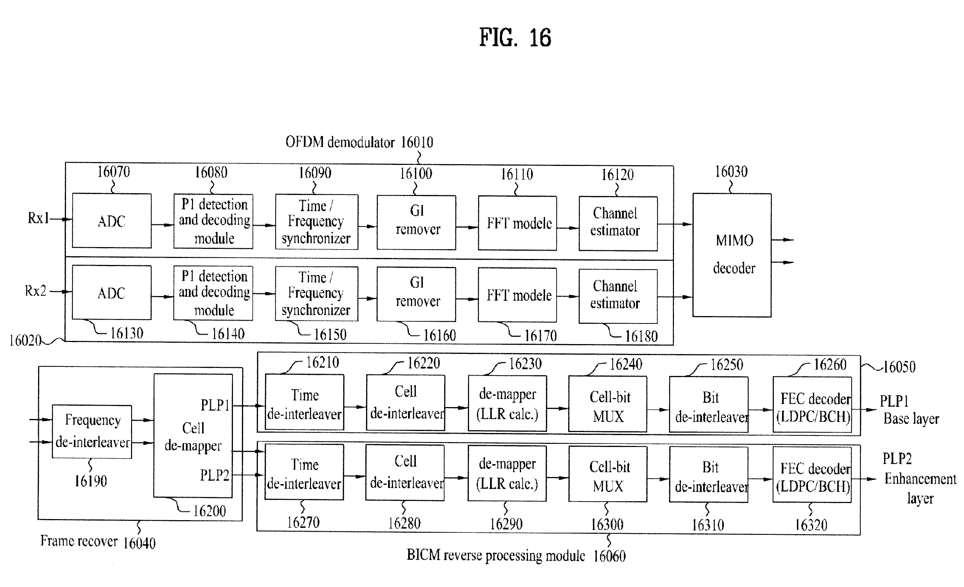

FIG. 16 is a diagram showing a digital broadcast receiver according to an embodiment of the present invention.

In the embodiment of FIG. 16, in the same manner as FIG. 15, the broadcast receiver receives and processes broadcast signals in which a base layer and an enhancement layer are differentiated from each other and are transmitted by a PLP. Although not shown in FIG. 16, the broadcast receiver includes an SVC decoder for SVC decoding data of the base layer and the enhancement layer to recover the data. In this case, the base layer may be included in the PLP1, and the enhancement layer may be included in the PLP2.

The broadcast receiver of FIG. 16 includes OFDM demodulators 16010 and 16020 for receiving OFDM signals through a plurality of antennas and demodulating the signals, a MIMO decoder 16030 for MIMO decoding demodulated data received through the plurality of antennas based on channel conditions to recover the data, a frame recoverer 16040 for recovering PLPs from received frames, and BICM reverse processing modules 16050 and 16060 for performing a BICM reverse processing sequence with respect to the PLPs to recover data. The OFDM demodulators 16010 and 16020 include a first OFDM demodulator 16010 and a second OFDM demodulator 16020. According to embodiments, the broadcast receiver may include the same number of OFDM demodualtors as the number of receive antennas provided for MIMO reception. The BICM reverse processing modules 16050 and 16060 may include a first BICM reverse processing module 16050 for processing a PLP corresponding to a base layer, and a second BICM reverse processing module 16060 for processing a PLP corresponding to an enhancement layer. The broadcast receiver may include an additional BICM reverse processing module according to embodiments and SVC encoding schemes.

The first OFDM demodulator 16010 includes an Analog to Digital Converter (ADC) 16070 for converting received analog signals to digital signals, a P1 detection and decoding module 16080 for detecting and decoding P1 signals containing L1 signaling information and determining the frame structure of the currently received signals based on P1 signals, a time/frequency synchronizer 16090 for performing time synchronization and frequency synchronization by detecting a guard interval, a GI remover 16100 for removing the guard interval after completion of synchronization, an FFT module 16110 for demodulating signals of a plurality of sub-carriers via implementation of Fast Fourier Transform, and a channel estimator 16120 for estimating a transmission channel from the transmitter to the receiver based on pilot signals inserted into a frequency region. The second OFDM demodulator 16020 includes the same elements 16130 to 16180 as those of the first OFDM demodulator 16010, and a description with respect to the same elements will not be repeated.

The MIMO decoder 16030 performs decoding depending on a predefined algorithm of MIMO, MISO and SISO schemes using channels estimated by the channel estimators 16120 and 16180. MIMO decoding may be reverse processing of MIMO/MISO processing performed by the MIMO processor in FIG. 15.

The frame recoverer 16040 includes a frequency de-interleaver 16190 for de-interleaving data on a frequency axis, and a cell demapper 16200 for cell demapping frames to output data or streams on a time axis.

The first BICM reverse processing module 16050 includes a time de-interleaver 16210 for de-interleaving data on a time axis, a cell de-interleaver 16220 for de-interleaving data per cell, a cell demapper 16230 for calculating a Log Likelihood Ratio (LLR) value via implementation of de-mapping, a cell bit multiplexer 16240 for rearranging data in a bit sequence using the calculated LLR value, a bit de-interleaver 16250 for de-interleaving data per cell, and an FEC decoder 16260 for correcting errors via implementation of LDPC/BCH decoding. The second BICM reverse processing module 16060 includes the same elements 16270 to 16320 as those of the first BICM reverse processing module 16050, and a description with respect to the same elements 16270 to 16320 will not be repeated.

The broadcast receiver may acquire data of the base layer from the PLP (PLP1) output from the first BICM reverse processing module 16050 and data of the enhancement layer from the PLP (PLP2) output from the second BICM reverse processing module 16060, and may perform SVC decoding of the data to recover a service. In the case in which the broadcast receiver recovers only the data of the base layer as described above, a basic service may be provided by decoding data of the base layer. In the case in which even the enhancement layer is recovered, a service having a high rank of video/audio qualities may be provided.

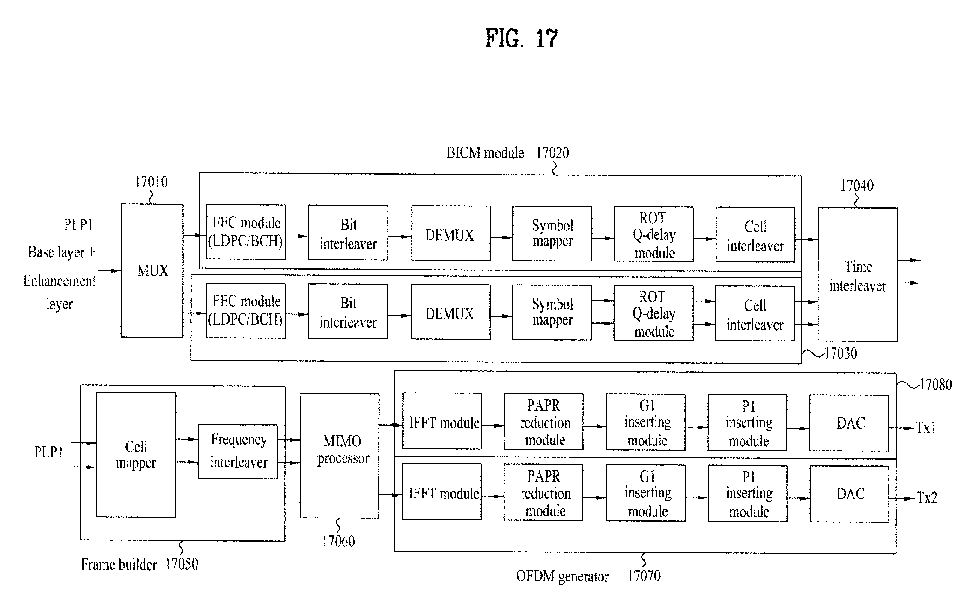

FIG. 17 is a diagram showing a digital broadcast transmitter according to another embodiment of the present invention.

The embodiment of FIG. 17, differently from FIG. 16, describes the case in which a base layer and an enhancement layer are transmitted together to a single PLP. Although not shown in FIG. 17, the broadcast transmitter includes an SVC encoder for SVC encoding data into a base layer and an enhancement layer to output the base layer and the enhancement layer.

The broadcast transmitter of FIG. 17 includes a multiplexer 17010, BICM modules 17020 and 17030, a time interleaver 17040, a frame builder 17050, a MIMO processor 17060, and OFDM generators 17070 and 17080. The broadcast transmitter of FIG. 17 has a structure similar to that of the broadcast transmitter of FIG. 15. Accordingly, in the following description, operations of the same elements as those of the broadcast transmitter of FIG. 15 will not be repeated, and only differences in terms of operation and configuration as compared to the broadcast transmitter of FIG. 15 will be described.

In the broadcast transmitter of FIG. 17, a base layer and an enhancement layer, output from the SVC encoder, are processed into a single PLP (PLP1). The multiplexer 17010 outputs the base layer and the enhancement layer included in the PLP (PLP1) differentially from each other, so that the base layer and the enhancement layer are respectively BICM processed in individual BICM modules. Differently from FIG. 15, the broadcast transmitter of FIG. 17 includes a single time interleaver 17040. The base layer and the enhancement layer join each other in the time interleaver 17040 so that interleaving is performed in a mix of the two layers, whereby diversity in a time region is acquired. The frame builder 17050 may assign a plurality of cells at the same position with respect to the enhancement layer transmitted through the cell mapper by a MIMO scheme during building of frames. A description with respect to the MIMO processor 17060 and the OFDM generators 17070 and 17080 is as described above. That is, data corresponding to the enhancement layer within the PLP may be transmitted according to an SISO or MISO scheme, and data corresponding to the enhancement layer may be transmitted according to a MIMO scheme.

In the case of FIG. 17, a single service is transmitted through the single PLP, and then is interleaved, which may result in improved interleaving effects.

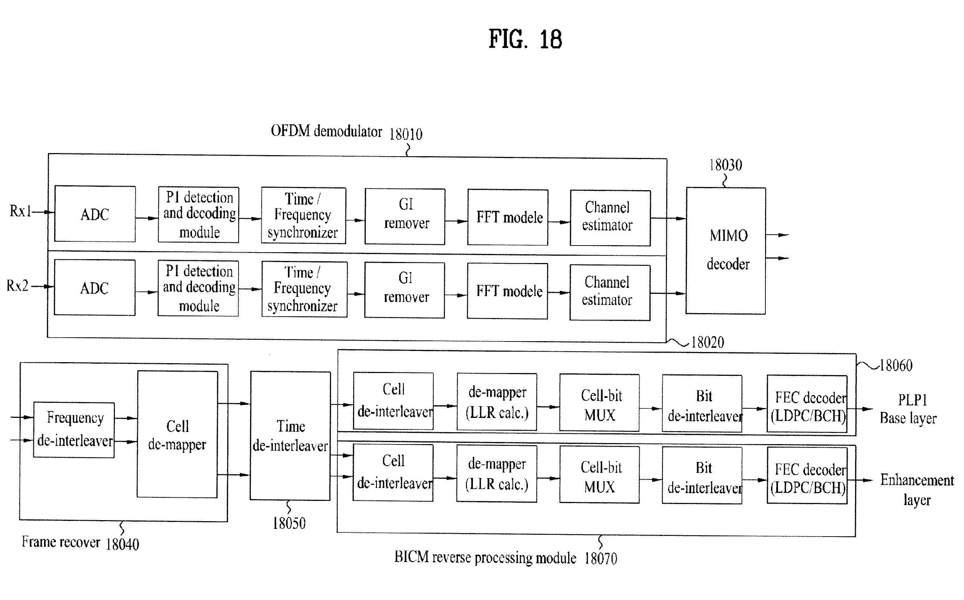

FIG. 18 is a diagram showing a digital broadcast receiver according to another embodiment of the present invention.

The embodiment of FIG. 18, in the same manner as FIG. 17, describes the broadcast receiver which receives and processes broadcast signals in which a base layer and an enhancement layer are transmitted to a single PLP. Although not shown in FIG. 18, the broadcast receiver includes an SVC decoder for SVC decoding data of the base layer and the enhancement layer to recover the data.

he broadcast receiver of FIG. 18 includes OFDM demodualtors 18010 and 18020, a MIMO decoder 18030, a frame recoverer 18040, a time de-interleaver 18050, and BICM reverse processing modules 18060 and 18070. The broadcast receiver of FIG. 17 has a configuration similar to that of the broadcast receiver of FIG. 16. Accordingly, in the following description, operations of the same elements as those of the broadcast receiver of FIG. 16 will not be repeatedly described, and only differences in terms of operation and configuration as compared to the broadcast receiver of FIG. 16 will be described.

In the broadcast receiver of FIG. 18, operations of the OFDM demodulators 18010 and 18020 and the MIMO decoder 18030 and operations of the frame recoverer 18040 are equal to the above description. However, the frame recoverer of FIG. 17 extracts and outputs a PLP (PLP1) including the base layer and the enhancement layer, and the time de-interleaver 18050 performs time de-interleaving of the PLP (PLP1) to separate the base layer and the enhancement layer from each other, and then rearranges the respective layers in a time region to output respective streams. The BICM reverse processing modules 18060 and 18070, as described above, process the base layer stream and the enhancement layer stream respectively, and consequently recover and output data of the base layer and data of the enhancement layer which are transmitted to the single PLP (PLP1) from the transmitter. The broadcast receiver decodes the stream of the PLP region according to channel conditions using the SVC decoder, thereby recovering and providing a service.

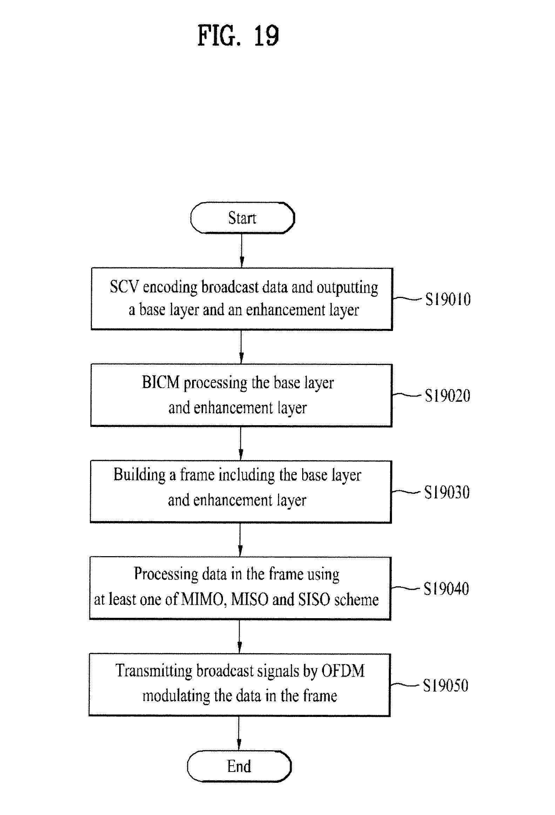

FIG. 19 is a flowchart showing a method for transmitting broadcast signals by a digital broadcast transmitter according to an embodiment of the present invention.

The digital broadcast transmitter performs SVC encoding of broadcast data using an SVC encoder to output a base layer and an enhancement layer (S19010). In the digital broadcast receiver, instead of assigning the base layer and the enhancement layer to individual PLPs, or assigning the base layer and the enhancement layer to a single PLP as described above, the base layer and the enhancement layer may be distinguished from each other by carriers during modulation.

The digital broadcast transmitter performs BICM processing of the base layer and the enhancement layer using the BICM module (S19020). The BICM processing may be performed as described above in relation to FIGs. 15 and 17.

The digital broadcast transmitter builds a frame including the base layer and the enhancement layer using a frame builder (S19030). According to embodiments, as described in relation to the methods (1) to (3) and FIGs. 12 to 14, the frame may be built so that a PLP corresponding to a base layer and a PLP corresponding to an enhancement layer may coexist in the same frame, or may exist in the respective frames. In addition, as described above, the frame building may be performed such that the base layer and the enhancement layer are divided into a MISO/SISO frame and a MIMO frame, and may be performed on a per PLP basis.

Additionally coded L1 signaling information is inserted in the frame builder along with a PLP. In other words, the frame builder may insert L1 pre signaling information containing information of FIGs. 7 to 9 during frame building.

The digital broadcast transmitter processes data included in the frame using a MIMO processor via at least one of MIMO, MISO and SISO schemes (S19040). The digital broadcast transmitter may process data so as to ensure that signals are processed in the same manner as the above description in relation to FIGs. 1 to 3. In the present embodiment, the data contained in the frame may be processed so that the data corresponding to the base layer (or the PLP corresponding to the base layer) is transmitted according to an SISO or MISO scheme and the data corresponding to the enhancement layer (or the PLP corresponding to the enhancement layer) is transmitted according to a MIMO scheme. In addition, in the case of a MIMO scheme, as described above, data may be processed by a spatial diversity method or a spatial multiplexing method. In the case of an SISO scheme, since a plurality of antennas may transmit the same signal, the MIMO processor may bypass data so that the same signal can be distributed through paths to the plurality of antennas. The MIMO processor may distribute and output MIMO processed data through the same number of paths as the number of transmit antennas used in a MIMO or MISO scheme.

The digital broadcast transmitter may transmit broadcast signals by OFDM modulating the processed data using OFDM generators (S19050). The OFDM modulation of the OFDM generators is as described in relation to FIGs. 15 to 17. In the OFDM modulation process, the digital broadcast transmitter may insert signaling information with respect to properties of corresponding frames and corresponding PLPs using a P1 insertion module. In other words, the P1 insertion module may insert a P1 symbol containing P1 signaling information as described above in relation to FIGs. 4 to 6 into broadcast signals. The broadcast signals may be OFDM modulated, and then be transmitted according to a MIMO, MISO, or SISO scheme selected in operation S19040. This is described in relation to FIGs. 1 to 3.

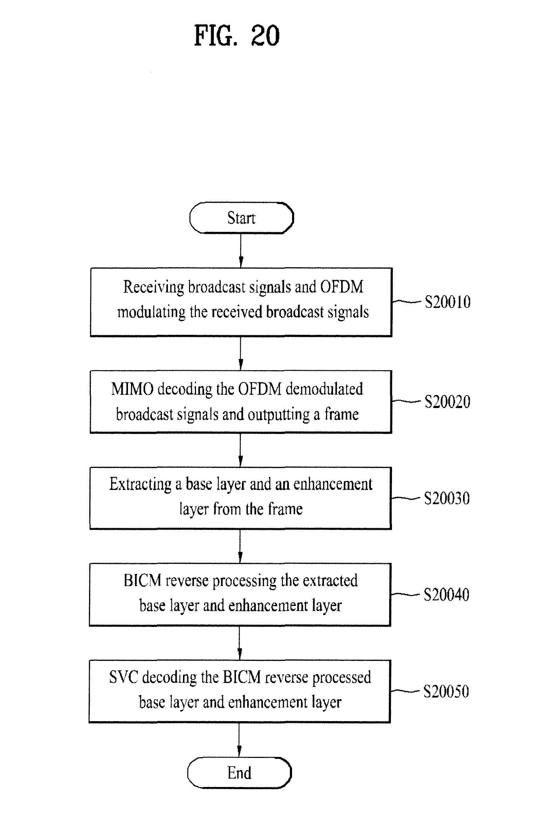

FIG. 20 is a flowchart showing a method for receiving broadcast signals by a digital broadcast receiver according to an embodiment of the present invention.

The digital broadcast receiver receives broadcast signals through a plurality of antennas and performs OFDM demodulation of the respective received broadcast signals (S20010). The digital broadcast receiver may perform OFDM demodulation using an OFDM demodulator, and may perform channel estimation using a channel estimator included in the OFDM demodulator. This is as described in relation to FIGs. 16 to 18. The received broadcast signals may be broadcast signals transmitted according to a MIMO, MISO, and/or SISO scheme. The digital broadcast receiver may recognize and process information with respect to properties of PLPs or frames of the broadcast received signals using a P1 detection and decoding module, and may perform OFDM demodulation and MIMO decoding so as to suit a transmission method (i.e. a MIMO, MISO, and/or SISO scheme) using the information.

The digital broadcast receiver may output frames by MIMO decoding the demodulated broadcast signals using a MIMO decoder (S20020). The MIMO decoder may recognize information with respect to paths of the broadcast signals received through the plurality of antennas using channel estimation acquired by the OFDM demodulator, and may perform MIMO decoding using the information. The MIMO decoder may perform MIMO decoding based on transmission paths of the received signals, and for example, may perform decoding using a power gain of signals on the respective paths if the broadcast signals are SISO or MISO transmission signals. The MIMO decoder may output frames by MIMO decoding the broadcast signals. The frame may include both a base layer and an enhancement layer according to transmission paths, transmitting environments, and transmitting methods as described above, and may include only the base layer.

The digital broadcast receiver may extract a base layer and an enhancement layer from the frames of the received broadcast signals using a frame recoverer (S20030). In addition, as described above, only a base layer may be extracted from the frames. The base layer and the enhancement layer may be output per PLP.

The digital broadcast receiver may acquire data of the base layer and data of the enhancement layer by BICM reverse processing the extracted base layer and enhancement layer using the BICM reverse processing module (S20040). In the case in which the MIMO decoder outputs only the base layer, it is natural that only data corresponding to the base layer may be acquired.

The digital broadcast receiver may acquire service data by SVC decoding the data of the base layer and the data of the enhancement layer using an SVC decoder (S20050). As described above, if SVC decoding is performed using only data of the base layer, a service of a basic quality (basic image quality, basic sound quality, basic optional data) may be acquired. If SVC decoding is performed using data of the base layer and data of the enhancement layer, a high quality of service data (high image quality, high sound quality, additional optional data) may be acquired.

### [Mode for Intention]

As described above, related items have sufficiently been discussed in the above "Mode for Invention".

### [Industrial Applicability]

As described above, the present invention may be wholly or partially applied to digital broadcast systems.

## Claims

1. A method for transmitting broadcast signals of a digital broadcast transmitter, the method comprising:
Scalable Video Coding (SVC) encoding broadcast data into a base layer and an enhancement layer;
Bit Interleaved Coding and Modulation (BICM) processing the base layer and the enhancement layer;
building a frame including the base layer and the enhancement layer, which are BICM processed;
processing data included in the frame according to at least one of Multiple Input Multiple Output (MIMO), Multiple Input Single Output (MISO) and Single Input Single Output (SISO) schemes; and
Orthogonal Frequency Division Multiplexing (OFDM) modulating the processed data and transmitting broadcast signals.

2. The method according to claim 1, wherein the base layer and the enhancement layer are assigned to and processed in separate Physical Layer Pipes (PLPs), respectively.

3. The method according to claim 1, wherein the frame building is performed, by means of a frame builder, so that the base layer and the enhancement layer are included in the same frame.

4. The method according to claim 1, wherein, among the data included in the frame, data corresponding to the base layer is processed according to a MISO or SISO transmission scheme, and data corresponding to the enhancement layer is processed according to a MIMO transmission scheme, by means of a MIMO processor.

5. The method according to claim 1, wherein the OFDM modulating the processed data and transmitting the broadcast signals includes inserting a P1 symbol, which carries P1 signaling information, into the broadcast signals by means of a P1 insertion module.

6. The method according to claim 2, further comprising inserting L1-pre signaling information, including information on the frame and the PLP, into the frame.

7. A digital broadcast transmitter comprising:
an SVC encoder for SVC encoding broadcast data into a base layer and an enhancement layer;
a BICM module for BICM processing the base layer and the enhancement layer;
a frame builder for building a frame including the base layer and enhancement layer, which are BICM processed;
a MIMO processor for processing data contained in the frame according to at least one of MIMO, MISO and SISO schemes; and
an OFDM generator for OFDM modulating the processed data and transmitting broadcast signals.

8. The digital broadcast transmitter according to claim 7, wherein base layer and the enhancement layer are assigned to and processed in separate PLPs, respectively.

9. The digital broadcast transmitter according to claim 7, wherein the frame builder builds the frame so that the base layer and the enhancement layer are included in the same frame.

10. The digital broadcast transmitter according to claim 7, wherein the MIMO processor processes, among the data included in the frame, data corresponding to the base layer according to a MISO or SISO transmission scheme, and data corresponding to the enhancement layer according to a MIMO transmission scheme.

11. The digital broadcast transmitter according to claim 7, wherein the OFDM generator includes a P1 insertion module for inserting a P1 symbol, which carries P1 signaling information, into the broadcast signals.

12. The digital broadcast transmitter according to claim 8, wherein the frame builder inserts L1-pre signaling information, including information on the frame and the PLP, into the frame.

13. A method for receiving broadcast signals of a digital broadcast receiver, the method comprising:
receiving broadcast signals and OFDM demodulating the broadcast signals;
MIMO decoding the demodulated broadcast signals and outputting a frame;
extracting a base layer and an enhancement layer from the frame;
BICM reverse processing the base layer and the enhancement layer; and
SVC decoding the base layer and the enhancement layer and acquiring broadcast data.

14. A digital broadcast receiver comprising:
an OFDM demodulator for receiving broadcast signals and OFDM demodulating the broadcast signals;
a MIMO decoder for MIMO decoding the demodulated broadcast signals and outputting a frame;
a frame recoverer for extracting a base layer and an enhancement layer from the frame;
a BICM reverse processing module for BICM reverse processing the base layer and the enhancement layer; and
an SVC decoder for SVC decoding the base layer and the enhancement layer and acquiring broadcast data.
